# EUROPEAN PATENT APPLICATION

(11) **EP 3 118 098 A1**
(43) Date of publication of application: **18.01.2017**
(21) Application number: 16179620.6
(22) Date of filing: 15.07.2016
(51) Int. Cl.: B62M 3/08

(54) **BICYCLE PEDAL**

(30) Priority: 17.07.2015 TW 104123317; 18.03.2016 TW 105108406
(71) Applicant: VP Components Co., Ltd., Taichung City 43865 (TW)
(72) Inventor: LIN, Wen-Hwa, Taichung City (TW)
(74) Representative: Viering, Jentschura & Partner mbB Patent- und Rechtsanwälte

(57) **Abstract**

A bicycle pedal (100) which is rotatably installed on a crank (200) of a bicycle includes a pedal body (10) and an axle (20). The pedal body (10) includes an axle bore (11) transversely passing through two ends thereof. The axle (20) is formed in a straight column shape and passes through the axle bore (11). The axle (20) is provided with a first end (22) and a second end (23). The first end (22) is screwedly mounted to the crank (200). The second end (23) is provided with a blocking portion (26) resisting against an outer edge of the pedal body (10). The pedal body (10) rotates against the axle (20). A tool driving portion (25) is disposed on an outer side of the second end (23) for a tool (300) to drive. With such configuration, the first end (22) is fastened to be attached to the crank (200) or loosened to be detached from the crank (200).

## Description

### BACKGROUND OF THE INVENTION

### 1. Field of the Invention:

The present invention relates to bicycle assemblies, and more particularly, to a bicycle pedal.

### 2. Description of the Related Art:

A traditional bicycle pedal is fastened on a bicycle crank and comprises a pedal body, an axle, a self-lubricating sleeve, a bearing unit, and a positioning limiting unit. The pedal body includes an axle bore passing therethrough. An inner end of the axle is attached to the crank, an outer end of the axle passes through the axle bore. The self-lubricating sleeve and the bearing unit are disposed between the axle and the pedal body. The position limiting unit is disposed at the outer end of the axle. With such configuration, when the pedal body and the axle axially move against each other, the position limiting unit prevents the pedal body from detaching from the axle.

Regarding the known bicycle pedal aforementioned, for achieving a stable installation, the axle is usually formed in a cone shape tapering toward the direction away from the crank. However, such a cone shape often internally causes the center of the pedal body to be structurally weak. Also, the amount of the internal components of such pedal body is relative large, causing a higher cost of the overall bicycle pedal.

Furthermore, when the bicycle pedal is to be installed on the crank or needs to be uninstalled from the crank for components replacement due to damage, a tool is required for being used to conduct the installation or uninstallation from an inner end of the crank, failing to meet the convenience of usage. In other words, the installation and uninstallation operation of such pedal are not efficiently conducted.

Therefore, an improved bicycle pedal is needed to overcome the known disadvantages above.

### SUMMARY OF THE INVENTION

For improving the aforementioned issues, embodiments of the present invention disclose a bicycle pedal having a straight-column shaped axle, which enhanced the structural strength of the pedal body and facilitates the installation and uninstallation operation of the bicycle pedal against a crank of the bicycle.

For achieving the objectives, embodiment of the present invention provides a bicycle pedal rotatably installed on a crank of a bicycle, comprising:
a pedal body including an axle bore transversely passing through two ends thereof; and
an axle formed in a straight column shape, passing through the axle bore, and provided with a first end and a second end, the first end screwedly mounted to the crank, the second end including a blocking portion resisting against an outer edge of the pedal body, the pedal body rotating against the axle, and a tool driving portion disposed on an outer side of the second end.

Also, a resilient member is disposed on an inner periphery of the axle bore, and the resilient member includes a through hole through where the axle passes.

Also, the resilient member is allowed to be a spring, such that the axle and the resilient member contact each other by multiple contact points therebetween.

Also, embodiments of the present invention further comprise a friction-resisting piece mounted around the first end of the axle for preventing the friction between the pedal body and the crank.

Also, the tool driving portion is formed in a hexagonal bore by where a hexagonal wrench drives.

With such configuration, the main objective achieved by the present invention is that the axle is formed in a straight column, thus enhancing the structural strength of the overall pedal body.

Another objective achieved by the present invention is that by use of a hexagonal wrench driving the second end of the tool driving portion, the first end of the axle is optionally fastened to the crank or loosened from the crank, facilitating the installation and uninstallation of the bicycle pedal and meeting the convenience of usage.

Another objective achieved by the present invention is that the friction-resisting piece is mounted around the first end of the axle, such that the friction-resisting piece is disposed between the pedal body and the crank for preventing the friction therebetween and decreasing the wearing possibility of the components.

Another objective achieved by the present invention is that the inner periphery of the axle bore is provided with a resilient member through where the axle passes. During the user pedaling, a vibration absorption and buffering effect is achieved.

Another objective achieved by the present invention is that due to the disposition of the resilient member, the axle and the resilient member contact each other by multiple contact points, such that the resilient member substitutes a traditional bearing. Therefore, the amount of components of the embodiment provided by the present invention is relatively less than the components amount of the known bicycle pedal, thus reducing the overall cost and meeting the economic demand.

Furthermore, embodiments of the present invention provide another kind of bicycle pedal, comprising:
a pedal body including an axle bore transversely passing through two ends thereof;
a lining tube disposed in the axle bore and integrally molded with the pedal body, the lining tube including a smooth inner bore arranged in axial alignment with the axle bore; and
an axle passing through the inner bore, enabling the pedal body to rotate against the axle, and provided with a first end and a second end opposite to the first end, the first end including a threaded section and screwedly mounted to a crank of a bicycle, the second end including a blocking portion resisting against an end of the lining tube away from the crank, the second end further including a tool driving portion.

As the lining tube integrally molded with the pedal body, additional bearing structure is omitted during the installation of the pedal body, thus simplifying the components and facilitating the installation process.

### BRIEF DESCRIPTION OF THE DRAWINGS

**Fig. 1** is a perspective view of the bicycle pedal in accordance with the embodiment of the present invention.
**Fig. 2** is an exploded view of the bicycle pedal in accordance with the embodiment of the present invention.
**Fig. 3** is a front view of the bicycle pedal, illustrating that the tool driving portion is formed in a hexagonal bore.
**Fig. 4** is a sectional view of the bicycle pedal in accordance with the embodiment of the present invention.
**Fig. 5** is a schematic view illustrating the operation status of the bicycle pedal wherein the tool driving portion is driven by a tool.
**Fig. 6** is a perspective view of the bicycle pedal in accordance with another embodiment provided by the bicycle pedal.
**Fig. 7** is an exploded view of the bicycle pedal in accordance with another embodiment provided by the bicycle pedal.
**Fig. 8** is a sectional view of the bicycle pedal in accordance with another embodiment provided by the bicycle pedal.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

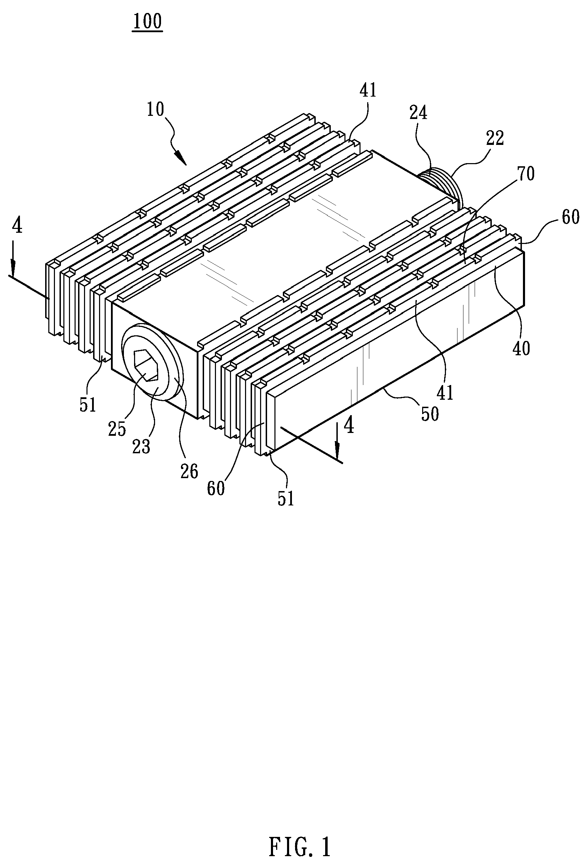

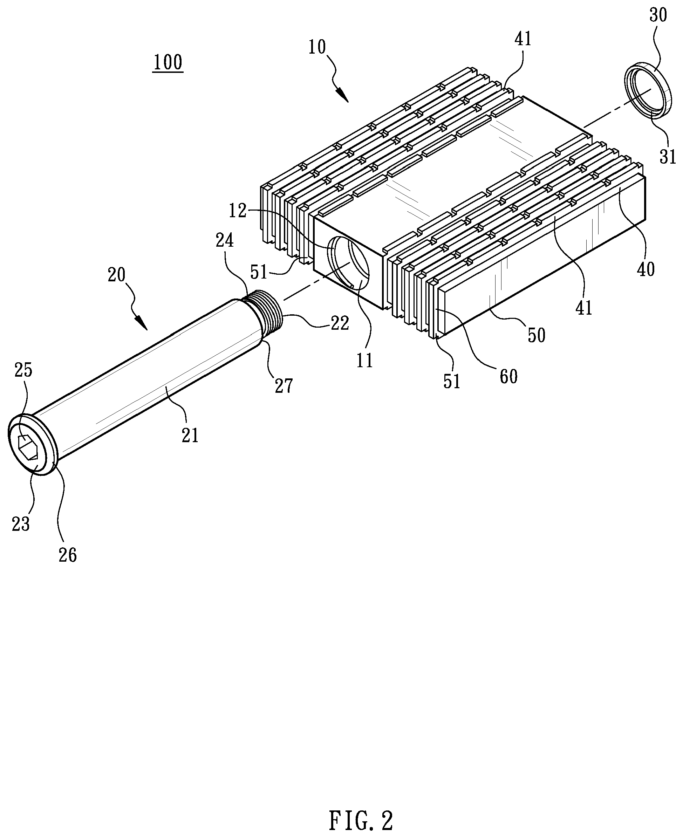

Referring to **Fig. 1** to **Fig. 5**, embodiments of the present invention provide a bicycle pedal **100** rotatably installed on a crank **200** of a bicycle. The bicycle pedal **100** comprises a pedal body **10** and an axle **20.**

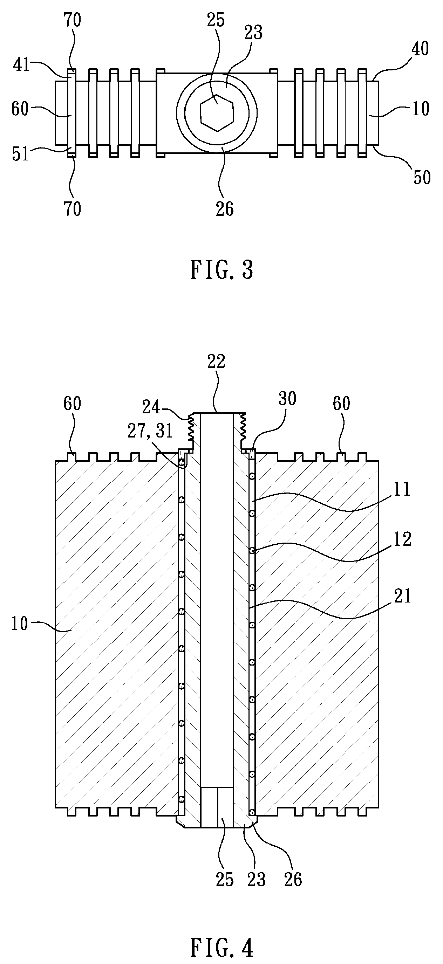

The pedal body **10** is made of plastic material and provided with a straight axle bore **11** transversely passing through two ends of the pedal body **10**. The inner periphery of the axle bore **11** includes a resilient member **12**, as shown by **Fig. 4**. Preferably, the resilient member **12** is a spring which is provided with a through hole and integrally molded with the axle bore **11** when the pedal body **10** is formed by injection molding.

The axle **20** is hollow and formed in a straight column shape, so as to be inserted into the through hole of the resilient member **12**, whereby the axle **20** is inserted in the axle bore **11**. Also, the axle **20** and the resilient member **12** contact each other by multiple contact points therebetween. The axle **20** includes a straight section **21** with a first end **22** and a second end **23** disposed at two ends of the straight section **21**. The first end **22** and the second end **23** protrude from the pedal body **10**; the straight section **21** is disposed in the axle bore **11** and surrounded by the resilient member **12**.

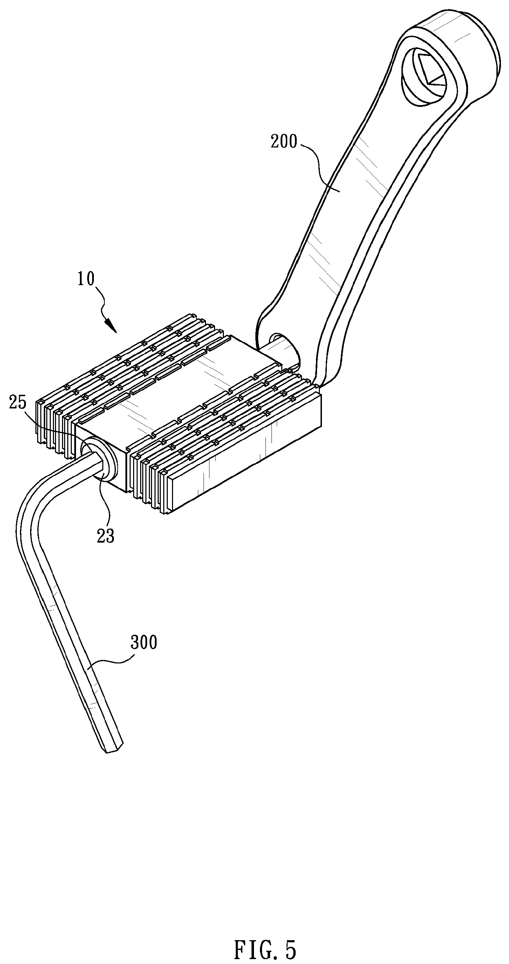

The outer diameter of the first end **22** is smaller than the diameter of the straight section **21** and provided with a threaded section **24** which is allowed to be screwedly mounted to the crank **200**. The outer diameter of the second end **23** is larger than the diameter of the straight section **21**, so as to form a blocking portion **26** resisting against the outer edge of the pedal body **10**, thereby preventing the pedal body **10** from detaching. In addition, the pedal body **10** is rotatable against the axle **20**. Further, a hexagonal tool driving portion **25** is disposed on the outer side of the second end **23**, as shown by **Fig. 3**, such that the tool driving portion **25** is driven by a tool **300** such as a hexagonal wrench, as shown by **Fig. 5**. As a result, the first end **22** is optionally fastened to the crank **200** or loosened from the crank **200**. Furthermore, a shoulder **27** is disposed on the axle **20** adjacent to the threaded section **24**.

A friction-resisting piece **30** is made of iron material and mounted around the first end **22** of the axle **20** for preventing the friction between the pedal body **10** and the crank **200**. Also, the friction-resisting piece **30** includes an inner blocking ring **31** for being combined to the shoulder **27** of the axle **20**.

In addition, the pedal body **10** includes a first surface **40** and a second surface **50** opposite to the first surface **40**. Two sides of the first surface **40** against the axle **20** are provided with plural first anti-slipping stripes **41**, respectively, and two sides of the second surface **50** against the axle **20** are provided with plural second anti-slipping stripes **51**, respectively, so as to increase the frictional force of the first surface **40** and the second surface **50**. Also, two ends of each first anti-slipping stripe **41** are connected with two ends of each corresponding second anti-slipping stripe **51** through a connecting section **60**, respectively.

The first anti-slipping stripes **41** and the second anti-slipping stripes **51** are arranged in parallel to the central axis of the axle **20**. Preferably, each first anti-slipping stripe **41** and each second anti-slipping stripe **51** are provided with plural protrusions **70** equidistantly spaced. The protrusions **70** are also formed in a stripe shape and arranged in parallel to the central axis of the axle **20**.

With the foregoing configuration, operation of the present invention will be illustrated below.

First, the first end **22** of the axle **20** is inserted into the axle bore **11** of the pedal body **10**, such that one side of the pedal body **10** resists against the blocking portion **26** of the second end **23**. Next, the friction-resisting piece **30** is mounted around the first end **22** of the axle **20**. Then, the first end **22** of the axle **20** is screwedly mounted to the crank **200**. Meanwhile, by driving the second end **23** of the tool driving portion **25** by use of the tool **300**, the first end **22** is fastened to the crank **200**, enabling the bicycle pedal **100** of the embodiment of the present invention to be used by the user for driving the bicycle.

On the other hand, if the bicycle pedal **100** is to be uninstalled from the crank **200** due to the maintenance of the damaged components thereof, the tool **300** is used to driving the tool driving portion **25** of the second end **23**, such that the first end **22** is detached from the crank **200**, whereby the bicycle pedal **100** is uninstalled.

Driving the tool driving portion **25** by use of the tool **300**, the embodiment of the present invention enables the first end **22** of the axle **20** to be fastened to the crank **200** or be loosened from the crank **200**, facilitating the installation and uninstallation of the bicycle pedal **100**, thus meeting convenience of usage. Also, the axle **20** provided by the embodiment of the present invention is formed in a straight column shape. Compared with the known cone-shaped axle, the axle **20** herein provided enhances the structural strength of the overall pedal body **10**.

Furthermore, by disposing the resilient member **12**, when the user pedals the bicycle pedal **100**, a vibration absorption and buffering effect is achieved. Also, the axle **20** and the resilient member **12** contact each other by multiple contact points between the axle **20** and the resilient member **12**, such that the resilient member **12** substitutes the traditional bearing member. As a result, the amount of the components of the bicycle pedal **100** provided by the embodiments of the present invention is relative less than the amount of the traditional pedal components, thus lowering the overall cost and meeting economical demand.

In addition, the embodiment of the present invention includes the friction-resisting piece **30** mounted around the first end **22** of the axle **20**. The friction-resisting piece **30** is disposed between the pedal body **10** and the crank **200**, preventing the friction between the pedal body **10** and the crank **200** from occurring and thereby lowering the components wearing issues caused by the friction.

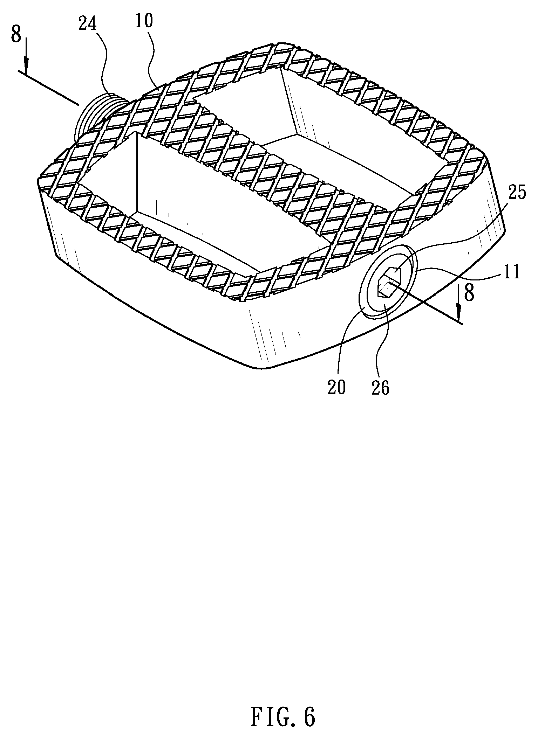

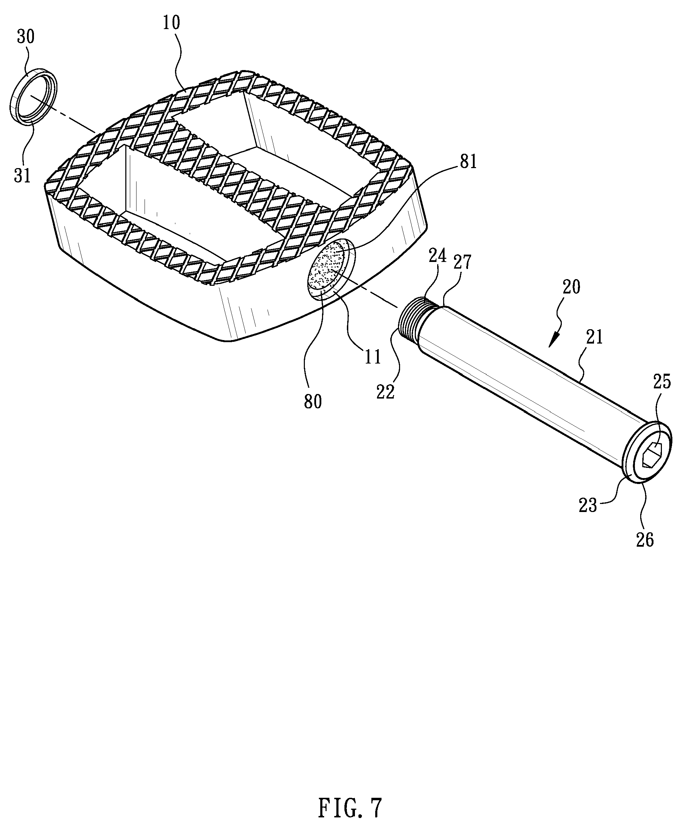

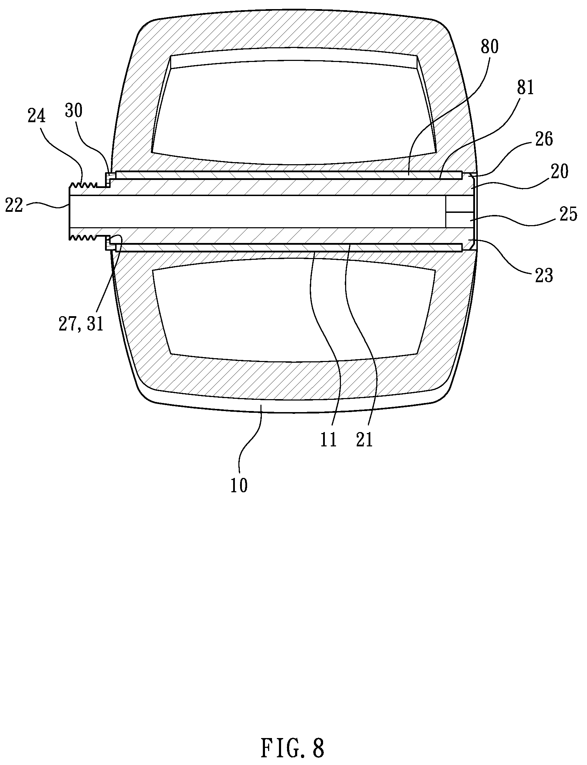

Referring to **Fig. 6** to **Fig. 8**, another embodiment of the present invention is provided, wherein the elements with the numeric identical to the numeric in prior drawings refer to the identical or similar elements aforementioned in this specification. The alternative embodiment of the bicycle pedal **100** provided by the present invention comprises a pedal body **10**, an axle **20**, a friction-resisting piece **30**, and a lining tube **80**.

The lining tube **80** is disposed in the axle bore **11** and integrally formed with the pedal body **10**. The lining tube **80** includes a smooth inner bore **81** with is arranged in axial alignment with the axle bore **11**. Also, in the embodiment of the present invention, the lining tube **80** is made of self-lubricating engineering plastic material, such as PE, PEEK, and PP material.

The axle **20** is hollow and straight formed and passes through the inner bore **81** of the lining tube **80**, such that the pedal body **10** is allowed to rotate against the axle **20**. The blocking portion **26** of the axle **20** resists against one end of the lining tube **80** away from the crank **200** and does not protrude outward from the pedal body **10**.

The friction-resisting piece **30**, when being assembled, is partially received in the axle bore **11** and connected with the other end of the lining tube **80**. Also, the friction-resisting piece **30** partially protrudes inward from the pedal body **10**. The friction-resisting piece **30** adjusts the distance between the pedal body **10** and the crank **200**; also, the friction-resisting piece **30** prevents the friction between the pedal body **10** and the crank **200** from occurring.

By use of the lining tube **80** integrally formed with the pedal body **10**, during the installation of the pedal, no additional bearing structure is needed. Instead, the lining tube **80** substitutes the known bearing member. Therefore, the overall components of the bicycle pedal **100** are simplified, the installation process is facilitated, and the overall cost is lowered.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A bicycle pedal (100), rotatably installed on a crank (200) of a bicycle, comprising:
a pedal body (10) including an axle bore (11) transversely passing through two ends thereof; and
an axle (20) formed in a straight column shape, passing through the axle bore (11), and provided with a first end (22) and a second end (23), the first end (22) screwedly mounted to the crank (200), the second end (23) including a blocking portion (26) resisting against an outer edge of the pedal body (10), the pedal body (10) rotating against the axle (20), a tool driving portion (25) disposed on an outer side of the second end (23).

2. The bicycle pedal (100) of claim 1, wherein a resilient member (12) is disposed on an inner periphery of the axle bore (11), and the resilient member (12) includes a through hole through where the axle (20) passes.

3. The bicycle pedal (100) of claim 2, wherein the pedal body (10) is made of a plastic material, and the resilient member (12) is integrally formed in the axle bore (11) when the pedal body (10) is formed by injection molding.

4. The bicycle pedal (100) of claim 2, wherein the resilient member (12) is a spring, such that the axle (20) and the resilient member (12) contact each other by multiple contact points between the axle (20) and the resilient member (12).

5. The bicycle pedal (100) of claim 1, wherein the axle (20) includes a straight section (21) between the first end (22) and the second end (23), the straight section (21) disposed in the axle bore (11), the first end (22) and the second (23) end protruding from the pedal body (10).

6. The bicycle pedal (100) of claim 5, wherein an outer diameter of the first end (22) is smaller than a diameter of the straight section (21), and an outer diameter of the second (23) is larger than the diameter of the straight section (21).

7. The bicycle pedal (100) of claim 1, further comprising a friction-resisting piece (30) mounted around the first end (22) and preventing a friction between the pedal body (10) and the crank (200).

8. The bicycle pedal (100) of claim 1, wherein the pedal body (10) includes a first surface (40) and a second surface (50) opposite to the first surface (40), the first surface (40) and the second surface (50) provided with plural first anti-slipping stripes (41) and second anti-slipping stripes (51), respectively, for increasing a frictional force of the first surface (40) and the second surface (50), respectively.

9. The bicycle pedal (100) of claim 8, wherein the first anti-slipping stripes (41) and the second anti-slipping stripes (51) are arranged in parallel to a central axis of the axle (20).

10. A bicycle pedal (100), rotatably installed on a crank (200) of a bicycle, comprising:
a pedal body (10) including an axle bore (11) transversely passing through two ends thereof; and
an axle (20) formed in a straight column shape, passing through the axle bore (11), and provided with a first end (22) and a second end (23), the first end (22) screwedly mounted to the crank (200), the second end (23) including a blocking portion (26) resisting against an outer edge of the pedal body (10), the pedal body (10) rotating against the axle (20), a tool driving portion (25) disposed on an outer side of the second end (23);
a resilient member (12) disposed in an inner periphery of the axle bore (11) provided with a through hole through where the axle (20) passes; and
a friction-resisting piece (30) mounted around the first end (22) and preventing a friction between the pedal body (10) and the crank (200).

11. A bicycle pedal (100), comprising:
a pedal body (10) including an axle bore (11) transversely passing through two ends thereof;
a lining tube (80) disposed in the axle bore (11) and integrally molded with the pedal body (10), the lining tube (80) including a smooth inner bore (81) arranged in axial alignment with the axle bore (11); and
an axle (20) passing through the inner bore (81), enabling the pedal body (10) to rotate against the axle (20), and provided with a first end (22) and a second end (23) opposite to the first end (22), the first end (22) including a threaded section (24) to be screwedly mounted to a crank (200) of a bicycle, the second end (23) including a blocking portion (26) resisting against an end of the lining tube (80) away from the crank (200), the second end (23) further including a tool driving portion (25).

12. The bicycle pedal (100) of claim 11, wherein the axle (20) is hollow.

13. The bicycle pedal (100) of claim 11, further comprising a friction-resisting piece (30) mounted around the first end (22) of the axle (20), the friction-resisting piece (30) partially received in the axle bore (11) and connected with another end of the lining tube (80).

14. The bicycle pedal (100) of claim 13, wherein a shoulder (27) is disposed on the axle (20) adjacent to the threaded section (24), the friction-resisting piece (30) formed in a ring shape and including an inner blocking ring (31) which is combined to the shoulder (27).

15. The bicycle pedal (100) of claim 11, wherein the lining tube (80) is made of a self-lubricating engineering plastic material.
